# EUROPEAN PATENT SPECIFICATION

(11) **EP 2 260 254 B1**
(45) Date of publication and mention of the grant of the patent: **21.06.2017**
(21) Application number: 09811868.0
(22) Date of filing: 06.03.2009
(51) Int. Cl.: F28D 13/00

(54) **THERMAL SYSTEMS USING THERMALLY-CONDUCTIVE PARTICULATE THERMAL MEDIA AND METHODS**
WÄRMESYSTEME MIT WÄRMELEITFÄHIGEN PARTIKELFÖRMIGEN WÄRMEMEDIEN UND VERFAHREN
SYSTÈMES THERMIQUES UTILISANT DES MILIEUX THERMIQUES PARTICULAIRES ET THERMOCONDUCTEURS ET PROCÉDÉS ASSOCIÉS

(30) Priority: 07.03.2008 US 68505 P; 22.12.2008 US 203341 P
(43) Date of publication of application: 15.12.2010
(73) Proprietor: Lab Armor, LLC, Cornelius, OR 97113 (US)
(72) Inventor: JARVIS, Richard, San Antonio TX 78230 (US)
(74) Representative: Ashton, Timothy
(86) International application number: PCT/US2009/005920
(87) International publication number: WO 2010/027518

(56) References cited:
- US-A- 1 378 474
- US-A- 3 466 166
- US-A- 3 478 745
- US-A- 3 637 966
- US-A- 4 677 143
- US-A- 5 529 807
- US-A1- 2005 252 636
- US-B1- 6 263 958
- US-B1- 6 263 958
- "Sand bath", Wikipedia , 13 January 2008 (2008-01-13), XP002726223, Retrieved from the Internet: URL:http://en.wikipedia.org/w/index.php?ti tle=Sand_bath&oldid=183981903

## Description

### CROSS REFERENCES TO RELATED APPLICATION

The present application claims the benefit of prior filed U.S. Provisional Application, serial number 61/068,505 filed 7 March 2008 and serial number 61/203,341 filed 22 December 2008. By this reference, the full disclosure, including the claims and drawings, of U.S. provisional application serial numbers 61/068,505 and 61/203,341 are incorporated herein as though now set forth in their entirety.

### BACKGROUND OF THE INVENTION

**1. Field of the Invention.** The present invention relates to thermal systems for supporting vessels or objects at reduced or elevated temperatures. More particularly, it especially relates to thermal systems using solid or semi-solid thermal media for supporting vessels or objects at reduced or elevated temperatures as is common in commercial practices, and to thermal media for use therein.
**2. Related Art.** Water baths have long been used for thermally affecting (i.e., heating or cooling) objects, vessels, or samples. For purposes of this description, we will refer to any such objects, vessels or samples as "specimens" and "objects." The word "object" might apply partly in the sense that they may be physical objects (although they often are not), but is chosen more in the sense that such objects represent the *objective* of a thermal bath, as the main objective of a thermal bath is to control the temperature of the one or more "objects" contained in the thermal bath. For purposes of this description, systems that have conventionally employed baths or blocks for heating or cooling are referred to generically as both "thermal baths" and "thermal systems."

The majority of thermal baths typically employ a thermal source, a temperature control unit, a power source, insulation, and a container (i.e., a tray, pan, tub, tank or the like) to contain water that is heated or cooled. The specimens to be thermally affected are conventionally placed in the water so that, by controlling the temperature of the water, the temperature of the specimens is likewise controlled.

Thermal systems with such basic components (or the equivalent) have been used conventionally for research, manufacturing and production in a wide variety of applications and industries, including (without limitation): in clean room or laboratory thermal baths that are used to support biological specimens at a particular temperature; for research, general practice and breeding environments such as the thawing of zygotes for in vitro fertilization or the like; for warming and thawing reagents or other solutions in any number of fields such as is used for diagnostic purposes in clinical or veterinary applications and for quality control purposes in a wide variety of industries; for culturing yeast and bacteria for preparation of cheeses, breads, and other foodstuffs in food and beverage production; for keeping food warm or cold while serving in the food services industries; for bioengineering and quality control in agricultural science; for R&D, testing, manufacturing and quality control in chemical and pharmaceutical industries, in refineries and other hydrocarbon applications, as well as in the cosmetics industry; for testing and quality control in agribusiness as well as in the fields of environmental management and waste management; in cleaning and sterilizing medical, dental or research instruments and in processing tissues in a number of fields; for research, production, and manufacturing environments in electronics; in biomedical and non-biomedical research; for warming baby bottles in nurseries, thawing blood, and for other thermal uses during patient care and operating room procedures and in personal care applications, particularly for bath & spa applications and products; to name a few. For reference, significant portions of the following descriptions generically refer to any and all of the thermal systems used in such applications.

However, despite the simplicity and seemingly universal acceptance of water baths across all these industries, water baths present some real problems. For one, water runs the risk of introducing biological (microbial) contaminants as well as chemical contaminants such as metals, salts and other chemicals from the water's source or leached out of pipes and containers.

Worse, once microbial contaminants are present, water baths can actually promote colonization of those contaminants. Add the moisture of water to the fact that thermal baths are generally set at temperatures ideal for biological activity, and water baths present a set-up to promote the growth of invading microorganisms. Colonization of the invading bacteria, yeast, fungi, or virus on or within the media can place personnel at risk, can compromise supplies and equipment, and jeopardizes sterile operations. Such ideal conditions for colonization require substantial routine instrument cleaning and maintenance in order to keep contaminants to a minimum.

To counter such risks, water or other wet media can be treated with broad spectrum antimicrobials such as antibiotic, fungicide, algaecide, and virucide agents to prevent the initiation and persistence of contamination. However, these agents are impermanent, and without rigorous maintenance and regular renewal, they become less effective. Moreover, these agents can contribute to hazardous wastewater production and the formation of antibiotic resistant biofilms. Such biofilms comprised of Escherichia coli, staphylococcus, or other microorganisms responsible for difficult-to-treat infections in humans, pose a significant risk to personnel and patients in laboratories and healthcare facilities.

Furthermore, water is messy, difficult to use, and requires accessory supports (e.g., racks, floats, and bottle-neck weights) to hold specimens in place. While it has only limited portability, stability is an even bigger problem with mobile laboratories. Even in a stationary lab, capped or uncapped specimens that are placed in water are prone to tipping over and floating, which can quickly lead to the contamination or destruction of costly samples or, vice versa, contamination of the thermal bath and the workplace by the specimen's contents. Full immersion of a specimen is likewise impractical which, in turn, causes relative hot-spots and temperature gradients that skew results and can lead to concentration-changing evaporation within a specimen vessel.

All in all, water is high maintenance. Water baths require frequent monitoring and water replenishment as well as routine cleaning and maintenance, which can be time-consuming and costly. If the water evaporates, not only are the specimens likely to be wasted, but running a water bath without the water can lead to instrument burn-out and risk of fire. Water, in the meantime, corrodes the instruments and produces residual mineral buildup over time.

Conventional dry thermal bath media have been tried with limited success in certain applications. However, even though such attempts helped reduce some of the risks associated with water in those applications, the attempts still present several additional drawbacks. In particular, solid aluminum block systems limit the vessels that can be used to the size and shape of the drilled-out receptacles in their bodies. The variety of the vessels and their unique sizes or shapes usually necessitate the purchase of numerous aluminum blocks or the costly production of custom aluminum block systems. Thermal bath media comprising sand or shot are known (see http://en.wikipedia.org/w/index.php?title=Sand_bath&oldid=183981903) but they do not offer a right balance of mechanical fluidity and support. Drawbacks to considering the use of more particulate dry thermal bath media include performance challenges to minimizing the bioburden of the bath and optimizing the ability to support bathed objects in an optimally stable position, while also providing effective thermal transfer properties. The characteristics of particulate matter impact the raw material cost as well as the cost and ease of using, handling, and processing the particulate matter for any particular application.

Many other objects and advantages will be evident to one of ordinary skill in the art. In view of the further descriptions herein, especially considered in light of the prior art, it is therefore yet another object of the present invention to improve upon, and overcome the obstacles of the prior art.

### BRIEF SUMMARY OF THE INVENTION

The invention is defined by the claims.

The present disclosure provides thermal bath media capable of maintaining a relatively constant temperature, having optimal shape and size, and maintenance and contamination control benefits. Central to many aspects of the present invention is thermally-conductive particulate media distinguished from conventional thermal bath media. Some of the most favorable qualities of the thermally-conductive particulate media is appreciated with media in the form of smooth, oblong pellets having their widest dimension between two and thirty millimeters, wherein said materials are capable of providing thermal transfer when used in standard thermal bath systems. In particular, the thermally-conductive pellets are non-granular and not jagged so as not to pierce or puncture objects inserted into them, and are moisture and gas impermeable to prevent the harboring of contaminants, and are sufficiently smooth, stiff and incompressible, and in some instances are sufficiently elliptical but noncircular in at least one cross-section to permit easy insertion of vessels to promote efficient thermal transfer. The media may comprise pellets having a mixture of uniform or non-uniform shapes and sizes.

The materials of the thermally-conductive particulate media can be a metal, preferably aluminum, silver, or copper, or a plastic, or graphite, or the like, typically shaped like pea gravel or slightly-flattened jelly-filled doughnuts. The materials can be molded or can be in the form of raw manufacturing material. The materials can comprise a polished, plated, or otherwise coated surface to provide a desired finish. The pellets may comprise an outer surface and a core, wherein the outer surface material is different from the core materials or the core may be substantially hollow.

The materials of the thermally-conductive pellets are dry and naturally more resistant to microbial growth than water and therefore less likely to harbor and contribute to transmitting microorganisms. Microbial growth can be further diminished by autoclaving or by routinely applying antimicrobial agents such as fungicides, algaecides virucides, and bactericides to the thermally-conductive pellets. Such antimicrobial agents can be permanently incorporated into the thermally-conductive pellets or otherwise onto the thermally-conductive pellets as a coating. Such coatings can prevent hazardous biofilm formation and produce a microbial contamination barrier. Examples of antimicrobial coatings include solutions comprised of ionic silver, ionic copper, or any permanent or semi-permanent disinfectant.

A further advantage of the thermally-conductive pellets hereof over conventional dry thermal bath media comprised of drilled out aluminum blocks is the ability of the pellets to conform to varied sizes and shapes of vessels placed in the thermal bath. The thermally-conductive pellets fill around the vessel providing sufficient thermal communication between the pellets and the vessel, thereby allowing the vessel and its contained specimen to reach the intended temperature.

Embodiments of various other aspects of the present disclosure also include a thermal control system comprising a thermal bath and media of thermally-conductive pellets contained in said bath and a method for inserting sample vessels into the media in thermal communication with the bath.

### BRIEF DESCRIPTION OF THE DRAWINGS

Figure 1 is a partially-cross-sectional schematic representation of one preferred embodiment of a thermal bath system (20) according to the teachings of the present invention.
Figure 2 is a side view of a spherical thermally-conductive pellet (41) of certain embodiments of the present invention.
Figure 3 is a side perspective view of a cylindrically-shaped thermally-conductive pellet (42) of certain embodiments of the present invention.
Figure 4 is a side view of a prolately-shaped thermally-conductive pellet (43) of certain embodiments of the present invention.
Figure 5 is a perspective view of an oblately-shaped thermally-conductive pellet (44) of certain embodiments of the present invention.
Figure 6 is a perspective view of five sample pellets (45-49) representing a particularly preferred embodiment of oblong variations of pellets (40) of the present invention.
Figure 7 is an orthogonal view of the pellets (45-49) of Figure 6.
Figure 8 is a perspective cross-sectional view of a homogenous variation of pellet (41) of certain embodiments of the present invention, which is representative of homogenous variations of each differently-shaped embodiment (41-49) of thermally-conductive pellets (40).
Figure 9 is a perspective cross-sectional view of a hollow variation (41') of pellet (41) of certain embodiments of the present invention, which is representative of hollow variations of each differently-shaped embodiment (41-49) of thermally-conductive pellets (40).
Figure 10 is a perspective cross-sectional view of a differentially-composed version (41") of pellet (41) of certain embodiments of the present invention, having different surface and core materials, which is representative of differentially-composed variations of each differently-shaped embodiment (41-49) of thermally-conductive pellets (40).
Figure 11 is a flow chart of a preferred process of using thermally-conductive pellets (40) in a bath system (20) of certain embodiments of the present invention.
Figure 12 shows a food services system 120 having components and characteristics that are similar or analogous to the thermal bath systems 20 of Figs. 1-11.

### DETAILED DESCRIPTION OF PREFERRED EMBODIMENTS

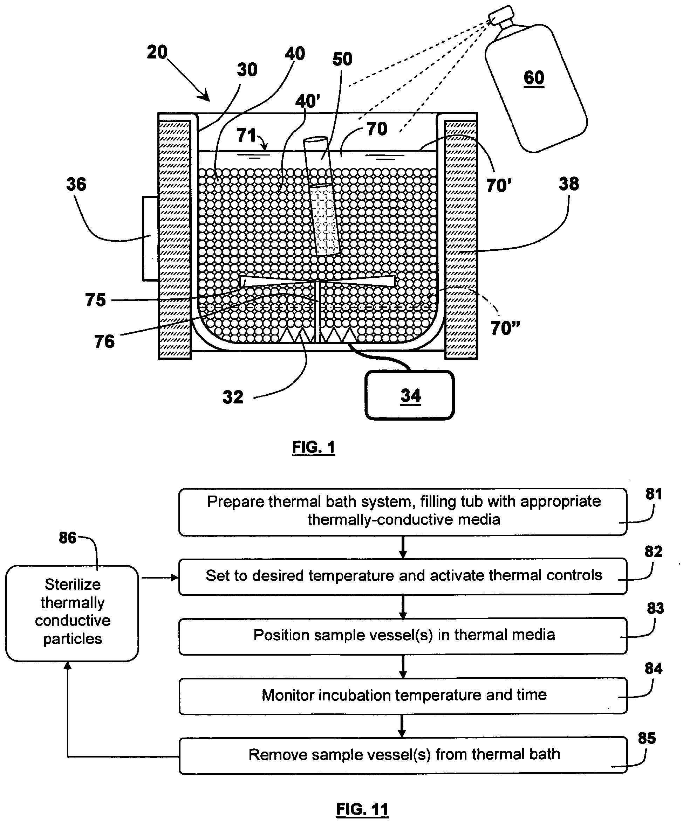

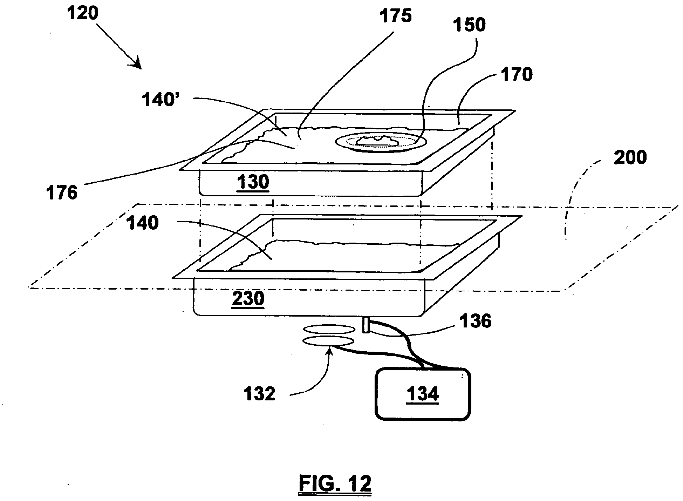

Referring now to preferred embodiments in more detail, although Figure 12 has some distinctions, Figures 1-11 show a thermal bath system as described in Applicant's co-pending provisional patent application 61/068,505, filed March 7, 2008, titled "Thermal Bath Systems and Thermally-Conductive Particulate Thermal Bath Media and Methods".

Figure 1 shows a partially-cross-sectional schematic representation of a thermal bath system (20) according to the teachings of the present invention. On the basic level, thermal bath system (20) comprises many components similar to those of conventional laboratory thermal bath systems - namely a tub (30), a thermal source (32), power source (34), a temperature control unit (36), and thermal insulation (38). Conventional laboratory thermal baths such as water baths and dry blocks are well-established laboratory instruments for heating or cooling objects, vessels, or samples contained therein, and their uses have become standard practices in the laboratory. Hence, as will be evident to those of ordinary skill in the art, various alternative embodiments of the certain aspects of the present invention can be implemented by use and/or modification of virtually any conventional thermal bath systems and their components. Such conventional thermal baths can be obtained from numerous manufacturers through a variety of sources - Fisher Scientific, VWR Scientific, Neslab, Tecam, and Applied Thermal Control, to name a few.

Thermal bath system (20) of Figure 1 combines such conventional elements together with particulate thermally-conductive media (40) and, preferably, a disinfectant (60), to provide an overall thermal bath system (20) that can be employed to statically support and control the temperature of specimens such as sample vessel (50). The tub (30) is a conventional tub that is typically employed to contain liquid thermal tub media, although modifications or substitutions may be made when using dry media without a liquid phase, as will be evident to those of skill in the art. In the embodiment of Figure 1, tub (30) is capable of containing thermally-conductive particulate media (40) (as described further herein). The particulate media preferably includes thermally-conductive particles (40) that are referred to herein as "pellets," although their preferred shapes (described further herein) are typically more like pea gravel or slightly-flattened jelly-filled doughnuts. The particulate media serves principally to communicate thermal energy between thermal source (32) and specimen vessel (50). The particulate nature of media (40) secondarily serves to support one or more vessel(s) (50) in a static orientation within media (40). Such static support helps keep vessels (50) biased in an upright orientation over time rather than dumping over and risking contamination. The static support of particulate media (40) also helps keep multiple vessels (50) in order within tub (30) to avoid confusion and for better tracking and the like.

In use of the embodiment of Figure 1 (and the alternative embodiments described herein), one or more specimen vessels (50) are inserted into the particulate media (40) through the upper opening of the tub (30). Although the specimen vessel (50) in the illustrated embodiment is a single test tube containing a liquid specimen, system (20) may be used for affecting or maintaining the thermal state of any form of specimen and/or specimen vessel for which thermal control is desired. Such specimens and/or specimen vessels may include solid objects or any form of vessel, including (without limitation) test tubes, vials, beakers, bottles, slides, bags and the like, and the contents contained thereby. As will be described further herein in connection with Fig. 11, laboratory thermal bath system (20) can be employed for heating or cooling one or more specimens (50) positioned in the thermally-conductive particulate media (40) contained therein.

In the embodiment of Figure 1, the temperature of the media (40) and consequently the specimen vessel (50) is maintained by insulation (38) in the body walls of tub (30) and by thermal source (32) typically located at the base of tub (30). Although alternatives may be substituted, thermal source (32) is powered by an electrical power supply (34) and controlled by thermal control unit (36). For improved thermal distribution, alternatives to thermal source (32) provide a separate thermal element in each of the five walls of the tub (30), preferably together with individual thermostats for each of the multiple elements in order to provide increased thermal input into tub (30) in any region where added thermal input is needed, such as would occur with the introduction of a large cold vessel in one region of bath (30). The thermal control unit (36) is preferably of the type having a temperature sensor and a microprocessor that can be programmed or mechanical dials that can be electronically set and executed.

Although the described embodiments preferably include conventional thermal elements with associated controls, it should be understood that some aspects of the invention can still be appreciated even if the thermal source (32) is embodied to include or consist of a mass of material that is heated or cooled separately, such as would be the case with ice packs being used as a thermal source either around or within tub (30).

The illustrated disinfectant (60) is a spray disinfectant that is periodically sprayed into media (40) in sufficient amounts to disinfect the surfaces of pellets (40). When practical, the pellets (40) are stirred in the course of applying the spray disinfectant (60) in order to increase the contact of the sprayed disinfectant with substantially all surfaces of the pellets (40). Because of the solid, impregnable surface of the pellets (40), the quantity of disinfectant (60) required for disinfecting the media is kept to minimal levels. One particular preferred embodiment of disinfectant (60) is a spray bottle of silver dihydrogen citrate, a biodegradable, broad-spectrum antimicrobial disinfectant, which confers further advantages to the thermally-conductive pellets (40), does not contribute to wastewater production. The disinfectant (60) when used to treat the thermally-conductive pellets (40) can destroy existing harmful microbes and prevent the growth and spread of new microbes in the surrounding environment. Alternative disinfectants such as bleach, alcohols, ammonium derivatives, or others can be substituted with corresponding properties and benefits. For each alternative of the sprayed form of disinfectant (60), care is taken to ensure that the disinfectant (60) does not enter within the vessel (50), in order to avoid deleterious affects on the specimen therein.

Other alternatives for certain embodiments of the present invention include forms of disinfectant (60) that are not spray disinfectants. For instance, in embodiments of the invention when the spray character is not critical, disinfectant (60) may be in the form of disinfectant films, layers, coatings or impregnations that are either integral with pellets (40) or otherwise disposed in contact with the outer surfaces of pellets (40), or may be in the form of process controls such as high temperature treatment, autoclaving, washing, or mechanical treatment. One particularly preferred washing system is a flow-through system that disinfects pellets (40) by circulating a liquid disinfectant through the media (40) while the media (40) is in its operative place within tub (30). Variations on such flow-through systems can be adapted to utilize steam, ethylene oxide (EtO) or other gaseous disinfectants as well, although some additional adaptations will be required to handle the gas, as will be evident to those of skill in the art. Another alternative system utilizes a special bath or special mode of operation to increase and maintain the heat of the pellets (40) at a high enough temperature to kill possible contaminants of concern. Many other alternative disinfectants will be evident to those of skill in the art, with corresponding benefits and detractions from the foregoing embodiments.

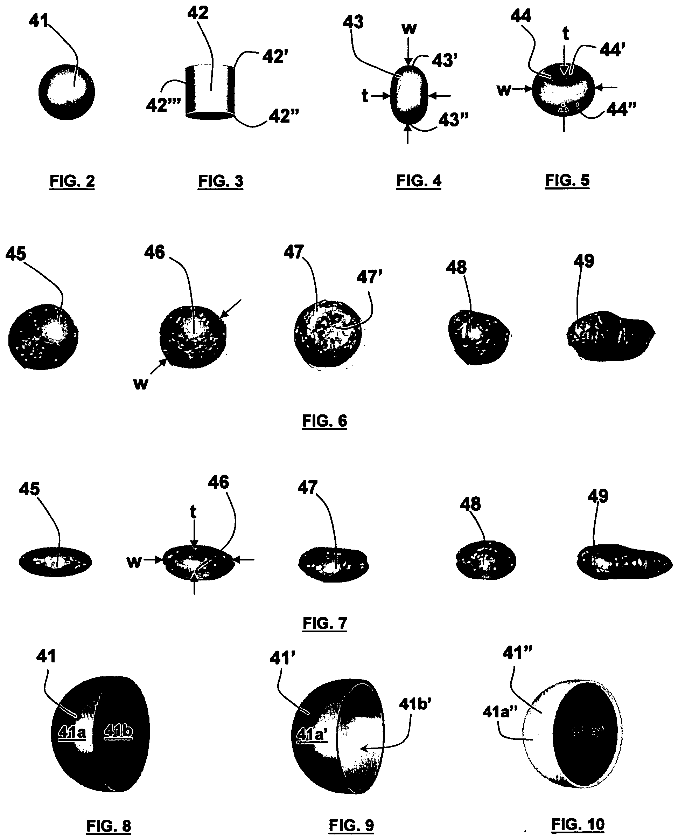

With reference to Figure 2 through Figure 7, variously-shaped alternative embodiments (41-49) of thermally-conductive pellets (40) have substantially rounded edges and hardened surfaces with a smooth polished finish. The rounded edges and polished surfaces of pellets (41-49) make the pellets smooth and are each adaptations to ensure that, when sample vessels (50) are placed into the tub (30) to be warmed or cooled or whenever the vessels (50) are manually moved around within tub (30), adjacent pellets (40) exert minimal friction against each other. Hence, the smooth pellets (40) move fluidly relative to each other to surround the vessel (50) with minimal frictional resistance and without significantly risking scratching of the surfaces of the vessels (50), which are typically glass or plastic surfaces. The thermally-conductive pellets (41-49), when used as media (40) in a thermal tub (30), fill sufficiently deep so that vessels (50) placed into the tub (30) are sufficiently submerged in the media (40). When tub (30) is so filled with particulate media (40), the sample vessels (50) are held in place and in position without the need for a further holding device, such as stationary or floating racks.

The different shapes of pellets (41-49) provide different benefits and detractions of the various embodiments that can be used for particulate media (40) of the present invention. Aspects of the present invention are embodied with the use of oblong pellets, such as is described further herein. Although a spherical thermally-conductive pellet (41) as shown in Figure 2 is not oblong, some aspects of the present invention can be appreciated with the use of pellets (41) having a spherical shape, either alone or in combination with oblong pellets (40). Likewise, although a cylindrical thermally-conductive pellet (42) as shown in Figure 3 has some edges (42' & 42") that are not rounded, its sidewall (42"') is rounded, and some aspects of the present invention can be appreciated with the use of pellets (42) that have some non-rounded edges (42' & 42"), either alone or in combination with pellets (40) that have all their surfaces and edges rounded.

It may be that surface descriptions such as "rounded," "polished" and "smooth" may be thought of as relative terms. It should be understood that pellets (40) can have immaterial surface imperfections (such as the imperfections visible in Figures 6 & 7) while still being considered "rounded" and "smooth." All of the surfaces and edges of the pellets (45-49) shown in Figures 6 and 7 are considered rounded and smooth despite all the imperfections visible therein. While the "polished" term refers to the way the surface of a pellet (40) is processed, all the surfaces of the pellets (45-49) shown in Figures 6 and 7 are polished. It is also noted that concavities in the surface of a pellet (40), such as the central dimple (47') of the middle pellet (47) in Figure 6, are immaterial to smoothness of the pellet (40). In an attempt to quantify the size of immaterial surface protrusions from an otherwise smooth surface, it is thought that surface protrusions having protruding dimensions (i.e., the radial extent of the protrusion) that are less than a third of the thinnest dimension (t) of an otherwise smooth pellet (40) are immaterial. Despite such protruding imperfections, it is thought that protrusions of such sizes would still be smooth.

The pellets that make up at least the bulk (i.e., the majority by volume) if not the entirety of particulate media (40) in tub (30) are oblong pellets. Referring particularly to the pellets (43 & 44) of Figures 4 & 5, the shape of oblong pellets can be better understood. Such pellets are referred to as "oblong" in the sense that each pellet's (43, 44) shortest through dimension (its "thinnest dimension" or "t") is significantly shorter than its longest through dimension (its "widest dimension" or "w"). The prolately-shaped pellet (43) of Figure 4 more accurately has the shape of a vertical cylinder with hem i-spherically rounded ends (43' & 4;3"); the thinnest dimension (t) of pellet 43 being the thickness of the cylinder, and the widest dimension (w) being the distance between the ends (43' & 43"). The prolately-shaped pellet (44) of Figure 5 more accurately has the shape of a prolate sphere (or an ellipsoid, much like the globe of the Earth) with symmetrically-truncated polar ends (44' & 44"); the widest dimension (w) of pellet (44) being the equatorial diameter of the prolate sphere, and the thinnest dimension (t) being the distance between the truncated polar ends (43' & 43"). Both the prolately-shaped pellet (43) of Figure 4 and the oblately-shaped pellet (44) of Figure 5 are oblong.

An oblong pellet of particulate media (40) has a thinnest dimension (t) that is more than 25% and less than 50% of the widest dimension (w) or, preferably, about half of its widest dimension. The same oblong character can also be seen in each of the pellets (45-49) of Figures 6 & 7, which are all preferred oblong variations (45-49) of pellets (40).

Figures 6 & 7 show five representative sample pellets (45-49) representing a particularly preferred embodiment of the preferred oblong variations of pellets (40) of the present invention. As will be elaborated further herein, the pellets (45-49) are preferably formed by polishing metal pellets or shot (preferably formed of aluminum) acquired in raw form from metal fabricators. Referring to the preferred embodiments of Figure 1, such polished pellets (represented by samples 45-49 in Figures 6 & 7) serve as the pellets (40) for thermal bath system (20) in presently preferred embodiments. Because of the shape, thermal conductivity and small size of such pellets (45-49), the particulate media (40) allows for efficient thermal communication by maximizing surface-to-surface contact between the pellets (40) and both the introduced specimen vessel(s) (50) as well as the thermal element (32).

Although oblong pellets (40) according to some aspects of the present invention may have a widest dimension (w) as large as thirty millimeters, the bulk of the pellets (40) of the most preferred embodiment have widest dimensions (w) of less than ten millimeters and preferably more than two millimeters.

In practice, in order to manage costs, the thermally-conductive pellets (40) of preferred embodiments are formed from irregularly-shaped particles of raw material, preferably with rounded and smooth surfaces. Even though such raw material is available with fairly smooth surfaces in its raw state, for optimal use of the present invention, it should be polished smooth in order to minimize friction between adjacent pellets (40) in a bath system (20). Pellets (40) are made of thermally conductive raw material, preferably a solid metal and most preferably aluminum or an aluminum alloy. Such raw material is preferably acquired from metal manufacturing plants in the form of pellets or shot, which may also be referred to as "granny pea," "mini pea" or "granulated particle ingot," and can be obtained at high purity, preferably of greater than 99% purity. The raw material is preferably not molded, in order to minimize cost of manufacture and/or purchase. Any standard small metal parts finishing equipment such as a vibratory bowl or vibratory tub can be used to polish the raw material with or without abrasives to achieve the desired polished surface characteristics of the preferred embodiments.

The performance characteristics of the resulting thermally-conductive pellets (40) are favorable attributes of the preferred embodiments. Not only do the resulting pellets (40) allow for high thermal conductivity and thermal retention when used in system (20), but pellets (40) also provide a balance of mechanical fluidity and support. The balance of mechanical fluidity and support allows vessels (50) to be readily inserted into the particulate media (40) [or the multi-phase media (71), when used in any particular embodiment] and thereafter held in place in a static position due to the mechanical interaction between the particulate media (40). A favorable aspect of the particulate media (40) resulting from this preferred method is that the bulk (i.e., the majority by volume) of the pellets are oblong in shape, which enhances the overall fluidity of the resulting media (40). Moreover, the pellets (40) of preferred embodiments are microbial resistant and are both moisture and gas impermeable.

Although some embodiments use pellets (40) of uniform sizes, other preferred embodiments use pellets (40) of mixed sizes and shapes, which typically allows for improved fluidity and thermal conductivity due to the distribution of smaller pellets with respect to larger pellets in a mixture. Irregularly shaped thermally-conductive pellets (40) preferably have widest dimensions (w) in the range of 2-10 millimeters and preferably take on an overall form of smooth symmetrical or nonsymmetrical ellipsoids, such as in a blend from which the five representative samples of Figures 6 & 7 have been sampled.

Despite the general preference to use rounded pellets that have been polished smooth, some aspects of the invention may still be appreciated with less-preferred alternative forms for pellets (40), that may include rough, jagged, uneven, rutted, bumpy, pitted, and etched forms, including polygons such as cubes, cones, pyramids, and cylinders, or twists, or rings, or various combinations of these or other forms.

Figure 8 shows a solid, homogenous pellet (41) as a representative comparator for any of the solid, homogenous pellets (40-49) described above with reference to Figures 1-8. As a homogenous pellet (41), the outer surface (41a) is of the same composition as the core (41b) of the pellet (41) shown in Figure 8, the composition being thermally-conductive and preferably a solid metal. The specific composition of the thermally-conductive material in preferred embodiments is most preferably aluminum or an alloy of aluminum. In alternative embodiments, copper, graphite, cobalt oxide or other thermally-conductive materials may alternately be used as the thermally-conductive raw material for pellets (40), as will be known to those of skill in the art. Alternative materials such as lightweight thermally-conductive plastics, epoxies and the like are particularly advantageous alternatives for use in applications where either minimal weight is desired and/or where there is a desire to minimize electrical conductivity through the particulate thermal media (40) within tub (30).

With reference to Figures 9 & 10, certain additional advantages are obtained with alternative embodiments that employ pellets (40) having hollow and/or differential composition, respectively. Figure 9 more particularly shows a representative thermally-conductive pellet (41) having a thermally conductive outer surface (41a') surrounding a substantially hollow core (41b'). Figure 10 shows a representative thermally-conductive pellet (41) having a thermally conductive outer surface (41a") surrounding a less dense or less conductive core (41b"). The outer surface (41a") can be made from any sufficiently thermally-conductive material and is composed of a different material than the material of inner core (41b"), which can be made from any rigid or non-rigid material such as ceramic, plastic, foam, water, gel or other semi-liquid or liquid. Due to the difference between the thermal conductivity and/or density properties of the surface (41a") and the core (41b") of representative pellet (41"), pellet (41") is referred to as having "differential composition". As will be understood by those of skill in the art, any of the variously shaped pellets (40-49) described in this application can be made of hollow or differential composition just as pellet (41') is hollow and pellet (41") has differential composition.

With reference again to Figure 1, in some preferred embodiments, tub (30) is filled with a multi-phase media (71), which is a multi-phase variation of thermally-conductive media. Multi-phase media (71) is "multi-phase" in that it is a combination of particulate media (40) and a fluid (70), preferably a liquid. Alternate embodiments of the fluid (70) of multi-phase media (71) include semi-liquids, gasses or vapors, or combinations thereof or combinations with liquids. Preferably, though, multi-phase media (71) includes particulate thermal media (40) [most preferably like oblong pellets (45-49)] together with water or other liquid media (70). In such embodiments, the fluid media (70) is generally included to help enhance the thermal properties of the thermal media (71). Liquid media (70) may also consist of or include lubricants and/or disinfectants (or the like) for the purposes of increasing fluidity and microbial control, respectively, of the media (71) within tub (30).

With embodiments relating to multi-phase media (71) that include liquid fluid media (70), the liquid portion (70) of the thermal media (71) generally fills the interstitial spaces (40') between the pellets (40), at least up to the level of the upper surface (70') of liquid media (70). For embodiments with liquid media (70), the level of the upper surface (referred to as the "fill level")(70') of liquid media (70) preferably covers substantially all of the particulate media (40), such as illustrated in Figure 1. However, lower liquid fill levels may also be used as desired. For instance, the fill level of liquid media (70) can be limited to a low level (70")(shown in dashed line) that covers the thermal element (32) but does not cover all the particulate media (40). At such a low fill level (70"), thermally-conductive liquid fluid media (70) helps facilitate heat transfer between thermal element (32) and particulate media (40) without wetting as much of the particulate media (40) and/or the specimen vessel(s) (50).

Although not essential to all aspects of the present invention, some preferred embodiments also utilize an impeller (75) (or a tumbler or the like) to stir or agitate the beads (40) and cause them to be spacially redistributed within tub (30), thereby increasing the rate of heat transfer within media (40) relative to thermal source (32). Operation of impeller (75) is especially beneficial to rapidly change (or "ramp up" or "boost") the temperature of the particulate media (40) near the top of tub (30), such as may be desired during prep time before vessels (50) are placed in media (40). However, as is shown in Figure 1, impeller (75) is preferably disposed at a position within tub (30) such that impeller (75) is not likely to physically engage vessel(s) (50) during its operation.

As a substitute or augmentation for impeller (75), alternative devices or systems for stirring or otherwise spacially redistributing pellets (40) and/or for rapidly boosting or changing the temperature of particulate media (40) will be evident to those of skill in the art. One particular mechanical alternative that achieves some of the benefits of the preferred embodiment is a vibrator to vibrate the tub (30) and the media (40) therein, to cause the media to slowly redistribute either continuously or intermittently. A heated air blower (such as a hair blow dryer) positioned to blow through the media (40) is a particular example of a non-mechanical alternative embodiment for use to rapidly boost the temperature of particulate media (40), particularly for when media (40) is used dry. Systems for circulating super-heated steam through dry particulate media (40) can also be used to serve both the boost function as well as the sterilization purpose described elsewhere herein. Although not shown in Figure 1, those of ordinary skill in the art will understand that impeller (75) (or its alternatives or equivalents) has an associated motor and motor controls for turning the shaft (76) to operatively rotate impeller (75).

Despite the benefits of such multi-phase media (71), other aspects of the present invention can be appreciated without using any fluid portion (70) of the thermal media in tub (30), in which cases the particulate media (40) is dry particulate media. By using dry particulate media (40), many of the hazards and maintenance burdens of using water baths can be avoided.

While numerous variations on the size, shape and composition of the particulate media (40) and/or multi-phase media (71) have been described above, it should be understood by those skilled in the art having the benefit of this disclosure that the drawings and detailed description herein are to be regarded in an illustrative rather than a restrictive manner, and are not intended to limit the invention to the particular forms and examples disclosed. On the contrary, the invention includes any further modifications, changes, rearrangements, substitutions, alternatives, design choices, and embodiments apparent to those of ordinary skill in the art, without departing from the spirit and scope of this invention, as defined by the claims. Thus, although the foregoing embodiments have been described, those of ordinary skill in the art will recognize many possible additional alternatives. For example, although it is preferred that at least the bulk of the particulate media (40) consist of a blend or mixture of one or more of the embodiments described herein, it may be beneficial to use particulate media (40) and/or multi-phase media (71) that includes blends or mixtures of the various embodiments that have been described together with other materials that have not been remotely described or even suggested. In any case, all substantially equivalent forms of particulate thermal media should be considered within the scope of the thermal media of this invention to the extent that the claims do not preclude as much when properly construed.

While much of the above descriptions describe preferred forms of particulate media (40) and production and preparation of the same, Figure 11 shows a flow chart of a preferred process of using the thermally-conductive particulate media (40) in a bath system (20) of certain preferred embodiments of the present invention. The first step (81) of such process is to prepare the thermal bath system (20) in accordance with the foregoing descriptions, filling tub (30) with appropriate particulate thermally-conductive media (40) or multi-phase media (71) to the desired fill levels. After preparing and/or obtaining a thermal bath system (20) with thermally-conductive pellets (40) of appropriate character according to the teachings of the present invention, a user (or an automated control) would then proceed to the following steps (82-86).

Referring to the flow chart in Figure 11, the second step (82) of the preferred process involves setting the system (20) to the desired temperature and activating the thermal controls to maintain as much, thereby bringing the thermal media within tub (30) to the desired temperature, whether it be above or below ambient. Such setting and activating step (82) involves use of thermal source (32), power source (34), and temperature control unit (36) in the conventional manner, with the aid of thermal insulation (38). To shorten the time to reach the desired temperature, it may be appropriate to stir the particulate media (40) after 10-30 min and/or periodically. Once stirred, the temperature of the particulate media (40) should be allowed to equilibrate for 15-60 minutes.

The next step (83) of positioning sample vessel(s) (50) in the thermal media (40, 71) is generally performed manually and is enabled by the fluidity of the particulate media (40). As is conventional with water baths, the objects or specimen vessel(s) (50) should be placed such that they are substantially immersed in media (40) without being immersed so far as to risk contamination through any upper opening in the vessel(s) (50), particularly when a liquid (70) is used with particulate media (40). Once appropriately placed, the vessel(s) (or objects) (50) can then remain in place without a rack and are left to incubate (i.e., to remain at the set temperature) for whatever period of time is desired. After the desired incubation time has been achieved, the vessel(s) (50) are removed (typically by hand) from system (20) at the bottom step (85) for further processing outside of system (20).

The final step (86) before reusing the system (20) is to clean or sterilize the thermally conductive media (40, 71) using techniques mentioned elsewhere herein or as will be evident to those of skill in the art. The final step (86) also preferably involves briefly agitating the particulate media (40) both after the last use and before the next use of system (20). While this step (86) is shown serially between the sample removal step (85) and the restart step (82), it should be understood that sterilization (86) (and other steps) may be omitted entirely or may be performed in a different sequence. This is particularly the case with the sterilization and/or cleaning step (86) as alternative cleaning and/or sterilization processes may be performed during the course of other steps (81-85) of the process, or may be omitted entirely, to the extent that bioburdens within media (40) are within levels required for integrity of whatever test is being conducted on vessel(s) (50).

In a particularly preferred variation of the thermal bath system (20) shown in Figure 1, programming controls are included with temperature control unit (36) to also control the staged and timed operation of each step (81-86) of the method of Figure 11. In such variation, control unit (36) includes one or more timers to automatically activate parts of steps (81-86) at scheduled or anticipated times during the day and during each cycle of using system (20). Particularly, automated cleaning and/or sterilizing variations of step (86) are automatically activated by control unit (36) at scheduled times after and before each shift in which the thermal bath system (20) has been or is likely to be used, in order to minimize microbial contamination in tub (30). Likewise, the thermal source (32) and/or the impeller (75) are activated by control unit (36) at scheduled or anticipated times before each shift in which the thermal bath system (20) is likely to be used, in order to minimize costly staff and/or equipment downtime (and potentially costly waste of specimens) while waiting for the required temperature of media (40) to be reached. Once the required temperature of media (40) is attained, as determined by a temperature probe or the like connected to control unit (36), automated controls in unit (36) then preferably deactivate impeller (75) and cause a visual, auditory or electronic "READY" signal to be presented to users of system (20). Thereafter, thermal controls continue to maintain the temperatures in the conventional manner, allowing for a user to program the duration of the incubation time (or the remaining incubation time) or to adjust the temperature setting of control unit (36) to any particular level at any time. Once the programmed incubation time is completed, the automated controls of unit (36) preferably also include provision for presenting an "INCUBATION COMPLETE" visual, auditory or electronic signal to indicate that the desired incubation period is completed, while also discontinuing operation of thermal source (32) at the appropriate time.

In certain embodiments, such automated controls of control unit (36) may also be coupled to automated specimen racks in order to cause vessel(s) (50) to be inserted into and/or removed from media (40) in accordance with a pre-programmed sequence, in order to provide a fully automated system (20).

While Figures 1-11 show embodiments with details that may be generally best suited for use as a thermal bath (20) in a laboratory setting, it will be evident to those of skill in the art from this description that much the same or analogous structure can readily be used in other thermal bath applications as well.

Demonstrating the ready adaptation or variation of several features of the Figure 1 embodiment for another specific application, Figure 12 shows a food services system (120) having components and characteristics that are similar or analogous to the thermal bath systems (20) of Figures 1-11. Food services system (120) represents a particular type of thermal bath and an alternative embodiment of thermal bath system (20). As such, food services system (120) also comprises many components similar to those of conventional food services thermal bath systems - namely a deep pan (130), a thermal source (132), power source (134), a temperature control unit (136), and thermal insulation (138). Conventional food services thermal baths such as water baths are commonplace apparatus for heating or cooling food or drink objects contained therein, and their uses have become standard practices in the food services industry.

Food Services thermal bath system (120) of Figure 1 combines such conventional elements together with particulate thermally-conductive media (140) to provide an overall food services thermal bath system (120) that can be employed to statically support and control the temperature of specimens such as sample vessel (150). The pan (130) is a conventional pan that is typically employed to contain water as the thermal media, although modifications or substitutions may be made when using dry media without a liquid phase, as will be evident to those of skill in the art. In the embodiment of Figure 1, pan (130) is capable of containing thermally-conductive particulate media (140) (as described further herein). The particulate media preferably includes thermally-conductive particles (140) that are referred to herein as "pellets," although their preferred shapes (described further herein) are typically more like pea gravel or slightly-flattened jelly-filled doughnuts. The particulate media serves principally to communicate thermal energy between thermal source (132) and specimen vessel (150). The particulate nature of media (140) secondarily serves to support one or more vessel(s) (150) in a static orientation within media (140). Such static support helps keep vessels (150) biased in an upright orientation over time rather than dumping over and risking contamination. The static support of particulate media (140) also helps keep multiple vessels (150) in order within pan (130) to avoid confusion and for better tracking and the like.

In use of the embodiment of Figure 1 (and the alternative embodiments described herein), one or more specimen vessels (150) are inserted into the particulate media (140) through the upper opening of the pan (130). Although the food or drink serving (150) in the illustrated embodiment is a single serving dish containing a food serving, food service system (120) will typically be used for keeping numerous servings warm or cold with or without any particular single-serving dishes. Such food or drink servings may include solid objects or any form of plate, bowl or the like, including (without limitation) drinking glasses, milk cartons, popsicle wrappers, napkins or the like, and the food or drink servings thereon. As will be understood, food services thermal bath system (120) can be employed for heating or cooling one or more food or drink objects (150) positioned in the thermally-conductive particulate media (140) contained therein.

In the embodiment of Figure 12, the temperature of the media (140) and consequently the food or drink object (150) is maintained in part by insulation (138) in the body walls of pan (130) and by thermal source (132) typically located at the base of pan (130). Although alternatives may be substituted, thermal source (132) is powered by an electrical power supply (134) and controlled by thermal control unit (136). The thermal control unit (136) is preferably of the type having a temperature sensor and a microprocessor that can be programmed or mechanical dials that can be electronically set and executed. It should be understood, though, that alternative embodiments of certain aspects of the invention may use a mass of material that is heated or cooled separately (such as ice packs) as a thermal source either around or within pan (130). It should also be understood that numerous modifications, variations and substitutions to the embodiment of Figure 12 may still fall within the scope of claimed inventions, such as in the nature of ice buckets, crock pots, and any other food serving apparatus that serves to maintain or control the temperature of food or drink specimens.

To those of skill in the art in light of these descriptions and the prior art, ready adaptation and variation of the food services system (120) and/or the thermal bath system (20) for a number of other applications will likewise be evident, each of which represents an alternative embodiment of the apparatus or system of the invention, as well as an alternative embodiment of the methods of the invention. Such other applications include (without limitation): applications for research, general practice and breeding environments such as the thawing of zygotes for in vitro fertilization or the like; for warming and thawing reagents or other solutions in any number of fields such as is used for diagnostic purposes in clinical or veterinary applications and for quality control purposes in a wide variety of industries; for culturing yeast and bacteria for preparation of cheeses, breads, and other foodstuffs in food and beverage production; for bioengineering and quality control in agricultural science; for R&D, testing, manufacturing and quality control in chemical and pharmaceutical industries, in refineries and other hydrocarbon applications, as well as in the cosmetics industry; for testing and quality control in agribusiness as well as in the fields of environmental management and waste management; in cleaning and sterilizing medical, dental or research instruments and in processing tissues in a number of fields; for research, production, and manufacturing environments in electronics; in biomedical and non-biomedical research, such as with culture incubators, ovens or refrigerators; for warming baby bottles in nurseries, for thawing blood, and for other thermal uses during patient care and operating room procedures and in personal care applications, particularly for bath & spa applications and products; to name a few.

In broad embodiment, the present invention is embodied as thermal bath media of thermally-conductive particulate media of any shape or material which can be used to replace conventional wet or dry media in existing thermal bath for transferring thermal energy to objects placed within. Baskets, bags, netted groups or other collectives of such media can be used in alternative embodiments to simplify handling. Many other variations, alternatives, substitutions and the like may be made while still gaining the benefit of certain aspects of the inventions. The present invention also envisions thermal bath systems designed for use with thermally-conductive particulate media. Such thermal bath systems can comprise designs that provide containment of the thermal bath media, thermal transfer properties, and design for ease-of-use, adaptation to robotic platforms and sterile applications.

While the foregoing written description enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope and spirit of the invention as claimed. It is intended instead that any claims with this application, or any claims that may be added or amended, be interpreted to embrace all further modifications, changes, rearrangements, substitutions, alternatives, design choices, and embodiments that may be evident to those of skill in the art. Although the foregoing embodiments are the most preferred at present, those of ordinary skill in the art will recognize many possible alternatives. For example, it may be possible to find another material that works better than the particulars we have discussed. In any case, all substantially equivalent systems, articles and methods should be considered within the scope of the present invention.

## Claims

1. A thermal bath system for use in controlling the temperature of a specimen vessel, comprising:
a tub, a thermal source, a temperature control unit, and
a thermal medium capable of maintaining a relatively constant temperature within the tub;
said thermal medium comprising a plurality of thermally-conductive pellets,
wherein the plurality of pellets comprises a metal, a plastic, graphite or cobalt oxide,
wherein the bulk of the plurality of pellets have an oblong shape,
wherein the oblong pellets have a thinnest dimension that is more than 25% and less than 50% of its widest dimension,
and wherein one or more specimen vessels are insertable into the thermal medium through an upper opening of the tub.

2. The system of claim 1, wherein the plurality of pellets comprises aluminum.

3. The system of claim 1, wherein the plurality of pellets comprises copper.

4. The system of claim 1, wherein the plurality of pellets comprises silver.

5. The system of claim 1, wherein said thermal medium comprises pellets having a substantially irregular shape.

6. The system of claim 5, wherein said thermal medium comprises pellets having a mixture of uniform shapes and sizes.

7. The system of claim 1, wherein said thermal medium pellets having a smooth and hardened surface.

8. The system of claim 1, wherein said thermal medium comprises pellets impermeable to moisture and gases.

9. The system of claim 1, wherein the media comprises pellets having a substantially small size of less than thirty millimeters in diameter.

10. The system of claim 1, wherein the surface of said pellets is permanently coated with an antimicrobial agent.

11. The system of claim 2 wherein each of said bulk of the plurality of pellets has a polished finish on an outer surface thereof, and wherein
said thermal medium is positioned in said tub in a manner such that sample vessels can be inserted within said thermal medium in thermal communication with said thermal medium.

12. The system of claim 11, further comprising a supply of antimicrobial compound for decontaminating the surface of said pellets.

13. The system of claim 12 wherein:
a specimen vessel is positionable within said thermal medium in a manner such that said vessel is partially or completely immersed in said thermal medium and the balance of mechanical fluidity and support of said thermal medium allows said vessel to be readily inserted into said thermal medium while causing said vessel to be supported and retained in a static orientation within said thermal medium.

14. The system of claim 13 wherein said pellets are made of aluminum or aluminum alloy and are polished smooth.

15. The system of claim 13 wherein:
said pellets have a substantially small size of less than thirty millimeters in diameter;
said thermal medium comprises pellets having irregular shapes; and said bulk of said plurality of pellets comprise pellets made of aluminum or aluminum alloy and have an outer surface that is impermeable to moisture and gases.

## Patentansprüche

1. Thermalbadsystem zur Verwendung bei der Steuerung der Temperatur eins Probegefäßes, umfassend:
Eine Wanne, eine thermische Quelle, eine Temperaturregeleinheit und ein thermisches Medium, das fähig ist, eine relativ konstante Temperatur innerhalb der Wanne beizubehalten; wobei das thermische Medium eine Vielzahl von thermisch leitfähigen Pellets umfasst, wobei die Vielzahl von Pellets ein Metall, einen Kunststoff, Grafit- oder Kobaltoxid umfasst, wobei der Großteil der Vielzahl von Pellets eine längliche Form, wobei die länglichen Pellets eine dünnste Abmessung haben, die mehr als 25% und weniger als 50% ihrer breitesten Abmessung ist, und wobei ein oder mehrere Probegefäße durch eine obere Öffnung der Wanne in das thermische Medium einsetzbar sind.

2. System nach Anspruch 1, wobei die Vielzahl von Pellets Aluminium umfasst.

3. System nach Anspruch 1, wobei die Vielzahl von Pellets Kupfer umfasst.

4. System nach Anspruch 1, wobei die Vielzahl von Pellets Silber umfasst.

5. System nach Anspruch 1, wobei das thermische Medium Pellets mit einer im Wesentlichen unregelmäßigen Form aufweist.

6. System nach Anspruch 5, wobei das thermische Medium Pellets mit einer Mischung aus gleichmäßigen Formen und Größen umfasst.

7. System nach Anspruch 1, wobei das thermische Medium Pellets mit einer glatten und gehärteten Oberfläche aufweist.

8. System nach Anspruch 1, wobei das thermische Medium Pellets umfasst, die undurchlässig in Bezug auf Feuchtigkeit und Gase sind.

9. System nach Anspruch 1, wobei das Medium Pellets umfasst, die eine im Wesentlichen kleine Größe von weniger als dreißig Millimeter im Durchmesser aufweisen.

10. System nach Anspruch 1, wobei die Oberflächen der Pellets permanent mit einem antimikrobiellen Mittel beschichtet ist.

11. System nach Anspruch 2, wobei jedes des Großteils der Vielzahl von Pellets ein poliertes Finish auf einer Außenfläche davon aufweist, und wobei das thermische Medium in der Wanne auf eine Weise derart positioniert ist, dass das Probegefäß innerhalb des thermischen Mediums in thermischer Kommunikation mit dem thermischen Medium eingeführt werden kann.

12. System nach Anspruch 11, das ferner einen Vorrat von antimikrobieller Mischung zur Dekontaminierung der Oberfläche der Pellets umfasst.

13. System nach Anspruch 12, wobei:
Ein Probegefäß innerhalb des thermischen Mediums auf eine Weise derart positionierbar ist, dass das Gefäß teilweise oder gänzlich in das thermische Medium eingetaucht ist und das Gleichgewicht von mechanischer Fließfähigkeit und des Trägers des thermischen Mediums ermöglichen, dass das Gefäß leicht in das thermische Medium eingeführt werden kann, während bewirkt wird, dass das Gefäß in einer statischen Orientierung innerhalb des thermischen Mediums getragen und gehalten wird.

14. System nach Anspruch 13, wobei die Pellets aus Aluminium oder Aluminiumlegierung hergestellt sind und glatt poliert sind.

15. System nach Anspruch 13, wobei:
Die Pellets eine im Wesentlichen kleine Größe von weniger als dreißig Millimeter im Durchmesser aufweisen; das thermische Medium Pellets mit unregelmäßigen Formen umfasst; und der Großteil der Vielzahl von Pellets, aus Aluminium oder Aluminiumlegierung hergestellte Pellets umfasst und die eine Außenfläche aufweisen, welche in Bezug auf Feuchtigkeit oder Gase undurchlässig ist.

## Revendications

1. Un système de bain thermique à utiliser pour contrôler la température d'un récipient à échantillons, comprenant :
une cuve, une source thermique, une unité de contrôle de la température et un milieu thermique capable de maintenir une température relativement constante à l'intérieur de la cuve ; ledit milieu thermique comprenant une pluralité de pastilles thermoconductrices , la pluralité de pastilles comprenant un métal, un plastique, de l'oxyde de graphite ou de cobalt, la majeure partie de la pluralité de pastilles ayant une forme oblongue, les pastilles oblongues ayant une dimension la plus mince qui est plus de 25 % et moins de 50 % de sa dimension la plus large, et un ou plusieurs récipients à échantillons pouvant être insérés dans le milieu thermique à travers une ouverture supérieure de la cuve.

2. Le système de la revendication 1, dans lequel la pluralité de pastilles comprend de l'aluminium.

3. Le système de la revendication 1, dans lequel la pluralité de pastilles comprend du cuivre.

4. Le système de la revendication 1, dans lequel la pluralité de pastilles comprend de l'argent.

5. Le système de la revendication 1, dans lequel ledit milieu thermique comprend des pastilles de forme sensiblement irrégulière.

6. Le système de la revendication 5, dans lequel ledit milieu thermique comprend des pastilles ayant un mélange de formes et tailles uniformes.

7. Le système de la revendication 1, dans lequel les pastilles dudit milieu thermique ont une surface lisse et durcie.

8. Le système de la revendication 1, dans lequel ledit milieu thermique comprend des pastilles imperméables à l'humidité et aux gaz.

9. Le système de la revendication 1, dans lequel le milieu comprend des pastilles ayant une taille sensiblement petite de moins de trente millimètres de diamètre.

10. Le système de la revendication 1, dans lequel la surface desdites pastilles est revêtue en permanence d'un agent antimicrobien.

11. Le système de la revendication 2, dans lequel chacune desdites majeures parties de la pluralité de pastilles a un fini poli sur une surface extérieure de celles-ci, et dans lequel ledit milieu thermique est positionné dans ladite cuve de manière à ce que des récipients à échantillons puissent être insérés à l'intérieur dudit milieu thermique en communication thermique avec ledit milieu thermique.

12. Le système de la revendication 11, comprenant en sus un approvisionnement en composé antimicrobien pour décontaminer la surface desdites pastilles.

13. Le système de la revendication 12, dans lequel :
un récipient à échantillons peut être positionné à l'intérieur dudit milieu thermique de manière à ce que ledit récipient soit immergé en partie ou complètement dans ledit milieu thermique et que l'équilibre entre la fluidité mécanique et le support dudit milieu thermique permette audit récipient d'être facilement inséré dans ledit milieu thermique tout en amenant ledit récipient à être supporté et maintenu en orientation statique à l'intérieur dudit milieu thermique.

14. Le système de la revendication 13, dans lequel lesdites pastilles sont faites en aluminium ou alliage d'aluminium et sont polies jusqu'à être lisses.

15. Le système de la revendication 13, dans lequel :
lesdites pastilles ont une taille sensiblement petite de moins de trente millimètres de diamètre ; ledit milieu thermique comprend des pastilles de formes irrégulières ; et ladite majeure partie de ladite pluralité de pastilles comprend des pastilles faites en aluminium ou alliage d'aluminium et dont la surface extérieure est imperméable à l'humidité et aux gaz.
